# EUROPÄISCHE PATENTANMELDUNG

(11) **EP 4 776 472 A2**
(43) Veröffentlichungstag der Anmeldung: **15.07.2026**
(21) Anmeldenummer: 25225458.6
(22) Anmeldetag: 19.12.2025
(51) Int. Cl.: H02J 7/70, H01M 10/44

(54) **VORRICHTUNG UND VERFAHREN ZUM AUTOMATISIERTEN ENTLADEN VON BATTERIEN**

(30) Priorität: 20.12.2024 DE 102024139155
(71) Anmelder: Robert Bosch GmbH, 70442 Stuttgart (DE)
(72) Erfinder: Bischoff, Christian, 70378 Stuttgart (DE); Letsch, Andreas, 70565 Stuttgart (DE); Luetke Juedefeld, Dominik, 48159 Muenster (DE); Martini, Dietmar, 70499 Stuttgart (DE); Kohlberger, Markus, 70174 Stuttgart (DE); Koch, Dominik, 70437 Stuttgart (DE)

(57) **Zusammenfassung**

Die Erfindung betrifft eine Vorrichtung zum automatisierten Entladen von Batterien (10), wobei die Vorrichtung umfasst:
- eine Leistungselektronik (26) zum Tiefentladen einer Batterie (10);
- eine Aktivierungsvorrichtung (22) zum Aktivieren eines Schaltelements (14);
- zumindest eines Verbindungssystems (18) zum elektrischen Verbinden und Lösen einer elektrischen Verbindung der Leistungselektronik (26) mit den Polen (12a, 12b) der Batterie (10) und zum Verbinden des Schaltelements (14) mit den Polen (12a, 12b) der Batterie (10);
- eine Steuerung zum Steuern der Leistungselektronik (26), des Verbindungssystems (18) und der Aktivierungsvorrichtung (22), wobei die Steuerung dazu ausgebildet ist, die Aktivierungsvorrichtung (22) zu betätigen, nachdem die Leistungselektronik (26) die Batterie (10) tiefentladen hat.

## Beschreibung

Die Erfindung betrifft eine Vorrichtung sowie ein Verfahren zum automatisierten Entladen von Batterien.

### Stand der Technik

Ausgediente elektrochemische Energiespeicher (Altbatterien, Zellen, Module, Packs), insbesondere Lithium-Ionen-Batterien und Natrium-Ionen-Batterien, werden am Ende ihrer Nutzungsdauer häufig einer mechanischen Zerkleinerung (Englisch: Shredding) zugeführt. Dieser Prozess birgt das Risiko der Entzündung bzw. Explosion von Batteriekomponenten, da die verbliebene elektrische Energie in den Batterien zu einem Lichtbogen führen kann, welcher in der Umgebung befindliche Materialien entzündet, beschädigt oder gar Lebewesen verletzen kann.

In Lithium- und Natrium-Ionen-Batterien befindet sich in den Batteriezellen ein hochentzündlicher Elektrolyt, insbesondere eine Mischung aus Ethylencarbonat und Dimethylcarbonat, welcher an Luft ein stark explosives Gemisch bildet. Daher werden Batterien vor der mechanischen Zerkleinerung entladen bzw. tiefentladen auf 0 V, damit keinerlei elektrische Restspannung mehr vorliegt und somit die Entstehung von Lichtbögen oder Zündfunken aufgrund elektrischer Restenergie vermieden werden.

Ein einfaches Entladen auf 0 V und anschließendes Öffnen der Pole der Batterie führt häufig zu einem starken Relaxieren der Spannung (Relaxationsspannung), da die noch verbliebenen Reaktanden in den Elektroden wieder ein Elektrodenpotential hervorrufen und sich somit erneut eine elektrische Spannung an der Batterie ausbildet. Um dies zu verhindern, muss die Batterie sehr lange entladen werden bzw. ab einem gewissen Punkt kurzgeschlossen und gelagert werden. Beispielsweise wird die Spannung von einer gesteuerten Leistungselektronik oder Entladeelektronik auf 0 V entladen und auf diesem Niveau gehalten, sodass der Entladestrom zunehmend kleiner wird. Anschließend wird die Batterie mittels einer Kurzschlussbrücke kurzgeschlossen. Aufgrund der sehr schnell eintretenden Relaxationsspannung ist dies zudem ein zeitkritischer Prozess. Die Kurzschlussbrücke wird dabei häufig während des mechanischen Zerkleinerungsprozesses auf den Polen der Batterie belassen.

Das Anbringen von Kurzschlüssen für die Entsorgung bzw. das Recycling von Batterien erweist sich als problematisch. Das Anbringen der Kurzschlüsse, die beispielsweise als Kurzschlussbrücke ausgestaltet sein kann, ist aufgrund der sehr hohen Variantenvielfalt an marktverfügbaren Batterietypen eine komplexe Aufgabe, die in der Regel nicht kosteneffizient automatisierbar ist. Bei manueller Anbringung birgt sie für den Menschen die Gefahr eines Stromschlags, in Kontakt mit Gefahrstoffen zu kommen oder Verbrennungen zu erleiden, da sich die Batterien bei der Tiefentladung stark erwärmen können. Dabei können ohne Weiteres Temperaturen von über 60 °C erreicht werden. Gleichzeitig muss die Dekontaktierung von der Entladeelektronik und die anschließende Kontaktierung der Batteriepole mit der Kurzschlussbrücke sehr schnell erfolgen, da sich ansonsten wieder eine gefährliche Relaxationsspannung ausbildet. Demnach ist der Schritt der Dekontaktierung mit der Entladeelektronik und das anschließende Kurzschließen der Batterie nicht nur ein zeitkritischer, sondern auch ein gefährlicher Prozess für den Menschen und somit von hervorgehobenem Interesse für eine Automatisierung.

Der Erfindung liegt somit die Aufgabe zugrunde, eine Vorrichtung und ein Verfahren zum automatisierten Entladen von Batterien bereitzustellen.

Die Aufgabe wird gelöst durch die Gegenstände der unabhängigen Ansprüche.

### Offenbarung der Erfindung

Gemäß einem ersten Aspekt der Erfindung wird diese Aufgabe gelöst durch eine Vorrichtung zum automatisierten Entladen von Batterien, wobei die Vorrichtung eine Leistungselektronik zum Tiefentladen einer Batterie und eine Aktivierungsvorrichtung zum Aktivieren eines Schaltelements umfasst. Ferner umfasst die Vorrichtung ein Verbindungssystem zum elektrischen Verbinden und Lösen einer elektrischen Verbindung der Leistungselektronik mit den Polen der Batterie und zum Verbinden des Schaltelements mit den Polen der Batterie sowie eine Steuerung zum Steuern der Leistungselektronik, des Verbindungssystems und der Aktivierungsvorrichtung. Die Steuerung ist dazu ausgebildet, die Aktivierungsvorrichtung zu betätigen, nachdem die Leistungselektronik die Batterie tiefentladen hat.

Die Leistungselektronik kann eine beliebige Elektronik sein, die dazu geeignet ist, eine Batterie, insbesondere eine Lithium-Ionen-Batterie oder eine Natrium-Ionen-Batterie, tief zu entladen. Der Begriff "tiefentladen" beschreibt einen Zustand bei Lithium-Ionen-Batterien, in dem die Spannung einer Zelle unter ein kritisches Niveau gefallen ist, das üblicherweise bei etwa 2,5 Volt oder darunter, insbesondere bei 0 V liegt, abhängig von der spezifischen Chemie der Zelle. Dieser Zustand ist für die Batterie extrem schädlich, da er irreversible chemische Reaktionen in der Elektrode und dem Elektrolyten auslösen kann. In einer Lithium-Ionen-Zelle wird Energie durch die reversible Einlagerung von Lithium-Ionen in die Anoden- und Kathodenmaterialien gespeichert und freigesetzt. Bei einer Tiefentladung werden jedoch nahezu alle Lithium-Ionen aus den Aktivmaterialien entfernt, was dazu führen kann, dass die Struktur des Elektrodenmaterials destabilisiert wird. Dieser Schritt ist für das Recycling jedoch sehr wichtig, damit beim Zerkleinern der Batterie keine Lichtbögen aufgrund einer Restspannung entstehen.

Das Schaltelement ist vorzugsweise so ausgestaltet, dass es zu einem beliebigen Zeitpunkt von der Aktivierungsvorrichtung aktiviert werden kann. Es kann ferner über Kabel oder Drähte mit der Batterie verbunden werden, um einen gewissen Abstand zur Batterie zu ermöglichen. Dies ist besonders vorteilhaft, da die Batterie beim Tiefentladen heiß werden oder sich aufblähen kann. Durch den Abstand sind gegebenenfalls anwesende Personen besser geschützt und können mit dem Schaltelement interagieren, ohne der Batterie unnötigerweise nahekommen zu müssen.

Das Verbindungssystem ist ein System, das dazu verwendet werden kann, die Leistungselektronik und die Aktivierungseinrichtung elektrisch mit der Batterie zu verbinden. Die Verbindung erfolgt vorzugsweise über batterieseitige Kontakte, das heißt, die Pole der Batterie. Das Verbindungssystem ist dazu eingerichtet, die Kontakte der Leistungselektronik und der Aktivierungsvorrichtung mit den Kontakten der Batterie in Kontakt zu bringen, um so einen Stromfluss zu ermöglichen.

Das Schaltelement stört das Tiefentladen der Batterie nicht, solange es nicht aktiviert ist. Es kann bei Aktivierung von einem nicht-leitenden Zustand in einen leitenden Zustand versetzt werden, sodass einen Kurzschluss zwischen den Polen der Batterie hergestellt wird. Der Kurzschluss sorgt dafür, dass sich eine etwaige Relaxationsspannung zwischen den Zellen der Batterie nicht aufbauen kann, sondern als Strom abfließt.

Die Steuerung kann durch ein Steuergerät, insbesondere einen Mikrocontroller oder ein anderes zentrales Steuerelement für Industrieroboter, gebildet sein. Die Steuerung ist so eingestellt, dass sie die Aktivierungsvorrichtung für das Schaltelement erst dann ansteuert, wenn die Batterie tiefentladen ist. Die vorliegende Erfindung ermöglicht so eine sehr einfache und kosteneffiziente Automatisierung des Kurzschließens von Batterien nach der Tiefentladung. Wenn das Schaltelement als kostengünstige Variante ausgeführt ist und aus leicht zu recycelndem Material besteht, kann es mit in den Recyclingprozess gegeben werden. Beispielsweise kann ein Kfz-Sicherungshalter oder eine Sicherungsfassung mit einer von der Aktivierungsvorrichtung einzusetzenden Sicherung als Schaltelement verwendet werden.

Die Vorrichtung ist damit geeignet, ein automatisiertes Verfahren zum Entladen von Batterien durchzuführen und löst daher ihre Aufgabe.

In einer Ausführungsform umfasst das Verbindungssystem zumindest zwei Roboterarme. Die Roboterarme sind dazu ausgebildet, die Leistungselektronik und das Schaltelement mit den Polen der Batterie zu verbinden.

Ein Roboterarm im Sinne der Erfindung ist ein System, das dazu ausgebildet ist, von einer Steuerung Steuerbefehle zu empfangen und diese in mechanische Bewegung umzusetzen. Dazu kann ein Roboterarm ein oder mehrere pneumatische und/oder hydraulische Systeme, Motoren, insbesondere Elektromotoren, sowie Aktuatoren umfassen. Die Roboterarme sind ferner dazu ausgebildet, die Leistungselektronik und das Schaltelement mit den Polen der Batterie zu verbinden. Die Verbindung kann beispielsweise eine form- und/oder kraftschlüssige Verbindung, eine Klebeverbindung, ein Schweißpunkt oder -naht oder eine andere geeignete Verbindung sein, die den Stromfluss ermöglicht und nicht einschränkt.

Vorzugsweise wird die Leistungselektronik über eine lösbare Verbindung, beispielsweise eine Klemme oder durch Andrücken der Kontakte, mit der Batterie verbunden, sodass die Verbindung nach dem Tiefentladen leicht gelöst werden kann. Das Schaltelement kann an der Batterie verbleiben, indem es beispielsweise mit einem Schweiß- oder Lötpunkt permanent mit der Batterie verbunden wird. Die Roboterarme sind in jedem Fall dazu ausgebildet, diese Verbindung herzustellen. Beispielsweise können die Roboterarme Greifer oder Schweiß- oder Lötspitzen aufweisen, um die Leistungselektronik und das Schaltelement mit der Batterie zu verbinden.

In einer Ausführungsform sind die Leistungselektronik und/oder die Schalteinrichtung über Kontakte mit den Polen der Batterie verbindbar und das Verbindungssystem umfasst ein Sensorsystem zum Positionieren der Kontakte der Leistungselektronik und/oder der Schalteinrichtung an den Polen der Batterie.

Das Sensorsystem wird dazu verwendet, die Umgebung des Verbindungssystems zu erfassen. Wenn das Verbindungssystem beispielsweise einen oder mehrere Roboterarme umfasst, kann ein Sensorsystem in den Roboterarmen verbaut sein. Alternativ kann das Sensorsystem eine statische Position in der Vorrichtung zum Entladen der Batterie umfassen, wenngleich es dennoch dem Verbindungssystem zugeordnet ist, da damit die Präzision der Steuerung des Verbindungssystems erhöht wird.

Das Sensorsystem kann das Verbindungssystem bei ihrer Arbeit beobachten und Daten dazu an die Steuerung liefern. Die Steuerung kann daraufhin das Verbindungssystem so ansteuern, dass die Kontakte der Leistungselektronik und des Schaltelements an die Pole der Batterie heran bewegt werden. Dabei kann die Steuerung, je nach Art der Ansteuerung, iterative oder kontinuierliche Steuersignale erzeugen.

Das Sensorsystem kann aus einem oder mehreren Sensoren bestehen. Geeignete Sensoren können beispielsweise optische Sensoren, insbesondere Kameras, IR-Sensoren, UV-Sensoren, Radar- oder Lidar-Sensoren sein. Auch Schall- bzw. Ultraschallsensoren können verwendet werden.

In einer Ausführungsform umfasst die Steuerung ein Modul zur Steuerung des Verbindungssystems, wobei das Modul zur Steuerung der Verbindungseinrichtung einen Algorithmus des maschinellen Lernens zum Erkennen der Position der Kontakte an der Batterie aus den Sensordaten des Sensorsystems umfasst.

Der Algorithmus des maschinellen Lernens verarbeitet die Sensordaten des Sensorsystems, welches vorzugsweise ein bildgebendes Sensorsystem ist. Dementsprechend sollte daher ein Modell gewählt werden, das zur Verarbeitung von Bilddaten geeignet ist. Beispielsweise kann der Algorithmus des maschinellen Lernens daher ein neuronales Faltungsnetz (Convolutional Neural Network - CNN) sein.

Das Modul wird von der Steuerung betrieben, muss von dieser aber nicht unbedingt trainiert werden. Beispielsweise kann der Algorithmus des maschinellen Lernens bereits trainiert bereitgestellt werden. Hat das Steuerungssystem hinreichend Rechenressourcen, kann der Algorithmus des maschinellen Lernens auch in situ und selbst überwacht trainiert werden, um beispielsweise einem Datendrift entgegenzuwirken oder Fehler im Betrieb der vorgeschlagenen Vorrichtung frühzeitig zu erkennen.

In einer Ausführungsform ist das Schaltelement dazu ausgebildet, von einem elektrisch nicht-leitenden Zustand in einen elektrisch leitenden Zustand geschaltet zu werden.

Der leitende Zustand ist ein Zustand, in dem das Schaltelement die Pole der Batterie kurzschließt. Zuvor befindet sich das Schaltelement in einem nicht-leitenden Zustand, sodass seine Kontakte ohne weiteres mit den Polen der Batterie verbunden werden können. Der Zustand wird erst dann umgeschaltet, wenn die Batterie tiefentladen ist, um eine Relaxationsspannung zu verhindern. Das Schaltelement kann dabei so ausgestaltet sein, dass der Schaltvorgang nicht reversibel ist. Denn insbesondere dann, wenn das Schaltelement mit der Batterie recycelt wird, muss es nicht von dem leitenden Zustand in den nicht-leitenden Zustand zurückversetzt werden.

In einer Ausführungsform umfasst das Schaltelement einen mechanischen Schalter, einen elektronischen Schalter, eine Sicherung, ein elektrochemisches Element, und/oder ein thermoelektrisches Element. Alternativ kann das Schaltelement ein loses Stromkabel mit geeignetem Querschnitt sein, welches zunächst nur an einem Ende an einem der Pole der Batterie fest verbunden bzw. kontaktiert ist. Nach dem vollständigen Entladen kann das andere Ende des Stromkabels mit dem anderen Pol der Batterie verbunden und somit die die Pole der Batterie kurzgeschlossen werden.

Ein elektronischer Schalter kann beispielsweise ein Transistor oder ein anderer Schalter sein, der elektronisch ansteuerbar ist, um eine elektrische Verbindung zwischen den Polen der Batterie zu schalten. Elektronische Schalter sind in der Regel günstig und können als Massenware ressourcenarm hergestellt werden.

Eine Sicherung ist eine besondere Form eines Schalters, der bei einem Stromfluss definierter Höhe von einem leitenden in einen nicht-leitenden Zustand wechseln kann. Die Sicherung kann von dem nicht-leitenden Zustand in den leitenden Zustand versetzt werden, indem sie in eine entsprechende Aufnahmevorrichtung, beispielsweise eine Fassung, eingesetzt wird. Die Aktivierungsvorrichtung kann dann beispielsweise als Aktuator ausgebildet sein, der die Sicherung in die Fassung einsetzt.

Eine Sicherung hat ferner den Vorteil, dass mit ihr überprüft werden kann, ob der Kurzschlussstrom, der aufgrund der Relaxationsspannung noch weiterhin einige Zeit zwischen den Polen der Batterie fließen kann, zu hoch ist und dadurch die Batterie zu stark erwärmen würde. Wenn ein Strom fließt, ist die Batterie noch nicht vollständig tiefentladen bzw. deaktiviert. Die Sicherung kann so dimensioniert sein, dass sie bei gefährlich hohen Strömen in den nicht-leitenden Zustand wechselt.

Ferner können elektrochemische oder thermoelektrische Elemente als Schaltelemente verwendet werden, die aufgrund einer chemischen Reaktion oder bei einer Temperaturänderung von dem nicht-leitenden in den leitenden Zustand versetzt werden können.

In einer Ausführungsform umfasst die Aktivierungsvorrichtung einen Linearaktuator. Der Linearaktuator ist dazu ausgebildet, das Schaltelement von dem nicht-leitenden Zustand in den leitenden Zustand zu schalten.

Ein Linearaktuator kann beispielsweise dazu verwendet werden, durch eine lineare Bewegung ein mechanisches Schalten des Schaltelements zu bewirken. Das kann beispielsweise ein Umlegen eines Schalters oder ein Einsetzen einer Sicherung umfassen.

In einem weiteren Aspekt betrifft die Erfindung ein Verfahren zum automatisierten Entladen von Batterien mit einer Vorrichtung wie voranstehend beschrieben, wobei das Verfahren die folgenden Schritte umfasst:
- Elektrisches Verbinden der Leistungselektronik mit den Polen der Batterie;
- Entladen der Batterie bis auf eine Entladespannung mit der Leistungselektronik; dabei kann es von Vorteil sein, die Entladespannung mittels einer Stromregelung noch eine gewisse Zeit bei der Entladespannung (ca. 0 V) zu halten, bevor das Schaltelement aktiviert und damit der äußere Kurzschluss der Batteriepole erfolgt. Damit kann der Kurzschlussstrom verringert werden.
- Elektrisches Verbinden des Schaltelements mit den Polen der Batterie;
- Kurzschließen der Batterie durch Aktivieren des Schaltelements mit der Aktivierungsvorrichtung, nachdem die Spannung der Batterie die Entladespannung erreicht hat; und
- Elektrisches Trennen der Leistungselektronik von der Batterie nach dem Kurzschließen oder während des Kurzschließens der Batterie.

Bisher wurde die Seite der Vorrichtung der Erfindung beleuchtet. Im Folgenden wird das passende Verfahren betrachtet.

Zunächst wird die Leistungselektronik mit der Batterie, genauer gesagt, mit ihren Polen verbunden. Über diese Verbindung wird die Batterie tiefentladen. Ferner wird das Schaltelement mit den Polen der Batterie verbunden. Dies kann zusammen mit dem Verbinden der Leistungselektronik oder während des Tiefentladens erfolgen.

Das Schaltelement befindet sich zum Zeitpunkt des Verbindens mit den Polen der Batterie in einem nicht-leitenden Zustand, um die Batterie nicht sofort kurzzuschließen. Daher spielt es keine Rolle, wann genau das Schaltelement mit den Polen der Batterie elektrisch verbunden wird. Allerdings muss das Schaltelement vor dem Trennen der Leistungselektronik mit der Batterie elektrisch verbunden werden, da dies ein zeitkritischer Moment ist. Der zeitliche Abstand zwischen dem Trennen der Leistungselektronik von der Batterie bzw. dem Ende der aktiven Tiefentladung und der damit verbundenen Entnahme der Restenergie und dem Kurzschließen sollte möglichst klein sein, damit sich keine oder zumindest eine möglichst geringe Relaxationsspannung ausbildet.

Beim Entladen kann es von Vorteil sein, die Entladespannung mittels einer Stromregelung noch eine gewisse Zeit bei ca. 0 V zu halten, bevor das Schaltelement aktiviert und damit der äußere Kurzschluss der Batteriepole erfolgt. Auf diese Weise kann der Kurzschlussstrom verringert werden.

Das Verbinden der Leistungselektronik und/oder des Schaltelements mit den Polen der Batterie kann vorzugsweise durch ein Verbindungssystem, insbesondere Roboterarme bzw. Aktuatoren erfolgen. Der Kurzschluss kann hingegen auf unterschiedliche Arten erfolgen. Beispielsweise kann ein elektronisches Schaltelement verwendet werden, das elektronisch in einen leitenden Zustand geschaltet wird. Alternativ kann beispielsweise eine Sicherung verwendet werden, die in eine Fassung eingesetzt wird, um den Stromkreis kurzzuschließen. Jeder der genannten Schritte ist automatisierbar, sodass der Entladevorgang der Batterie nicht länger von einer Person durchgeführt werden muss, die sich der Gefahr einer entzündenden Batterie aussetzen muss. Damit löst dieser Aspekt der Erfindung seine Aufgabe.

In einer Ausführungsform erfolgt das elektrische Verbinden des Schaltelements und der Leistungselektronik mit den Polen der Batterie gleichzeitig durch das Verbindungssystem.

In dieser Ausführungsform umfasst das Verbindungssystem zwei oder mehr Roboterarme, die jeweils einen Kontakt für die Leistungselektronik und das Schaltelement mit einem Pol der Batterie verbinden. Der Kontakt kann dergestalt sein, dass ein Kontaktpunkt für das Schaltelement mit der Batterie form- oder kraftschlüssig, durch Kleben oder durch Schweißen mit dem Pol der Batterie verbunden wird. Der Kontakt zur Leistungselektronik wird durch reversibles Verbinden, beispielsweise durch Andrücken oder Anklemmen, verbunden.

Das gleichzeitige Verbinden kann in vorteilhafter Weise die Anzahl der benötigten Systeme des Verbindungssystems verringern, da für jeden Pol nur ein Kontaktsystem benötigt wird. Bei Batterien einheitlicher Größe kann die Anzahl der Systeme sogar auf ein System reduziert werden, wenn beispielsweise ein Roboterarm beide Pole gleichzeitig oder nacheinander bedient.

In einer Ausführungsform geht dem elektrischen Verbinden der Leistungselektronik und des Schaltelements an der Batterie ein Positionieren des Verbindungssystem an den Polen der Batterie voraus.

Das Verbindungssystem wird in dieser Ausführungsform zunächst positioniert. Das heißt, dass das Verbindungssystem nicht einfach nur geradlinig auf die Pole zugefahren wird. Stattdessen wird eine aktive Steuerung verwendet, mit der die Kontaktierung der Leistungselektronik und des Schaltelements mit den Batteriepolen in zwei oder drei Dimensionen vorgenommen wird.

Dadurch kann das Verbindungssystem beispielsweise auf unterschiedliche Batterietypen oder Bauarten und Modelle reagieren. Zur Steuerung des Verbindungssystems kann ein Steuergerät verwendet werden, wie es üblicherweise für Industrieroboter eingesetzt wird.

In einer Ausführungsform umfasst das Verbindungssystem zwei Roboterarme und für jeden Roboterarm ein Sensorsystem. Das Positionieren des Verbindungssystem umfasst dabei die folgenden Schritte:
- Erfassen der Position der Kontakte der Batterie mit den Sensorsystemen;
- Erzeugen von Steuerbefehlen zur Steuerung der Roboterarme; und
- Heranführen der Kontakte der Leistungselektronik und des Schaltelements an die Kontakte der Batterie durch Ausführen der Steuerbefehle.

Zur verbesserten Positionierung des Verbindungssystems kann ein Sensorsystem verwendet werden. Dieses kann die gesamte Vorrichtung oder lediglich das Verbindungssystem bzw. einzelne Roboterarme erfassen. Alternativ kann das Sensorsystem beziehungsweise einzelne Sensoren beispielsweise in den Roboterarmen integriert sein.

Zunächst wird die Position der Kontakte der Batterie erfasst. Die Kontakte der Batterie sind die Pole. Aus der relativen Position der Roboterarme und der Kontakte werden Steuerbefehle erzeugt, mit denen die Roboterarme angesteuert werden. Die Roboterarme werden dann so positioniert, dass sie die Leistungselektronik und das Schaltelement mit den Kontakten der Batterie verbinden können.

In vorteilhafterweise kann durch die Verwendung der Sensordaten zum Erzeugen von Steuerbefehlen die Präzision erhöht werden, mit der die Roboterarme der Leistungselektronik und des Schaltelements mit den Polen der Batterie verbinden.

In einer Ausführungsform geht dem Lösen der Verbindung der Leistungselektronik ein Messen der Spannung an dem Schaltelement voraus. Die elektrische Verbindung der Leistungselektronik wird von der Batterie erst dann gelöst, wenn die Spannung an dem Schaltelement null Volt beträgt.

Am Schaltelement kann die Batteriespannung überprüft werden. Wenn die Spannung größer als 0 V ist, ist das ein Indikator dafür, dass das Schaltelement noch nicht vollständig in den leitenden Zustand versetzt wurde, beispielsweise weil es nicht korrekt aktiviert wurde. Ist das Schaltelement beispielsweise eine Sicherung, kann es sein, dass die Sicherung nicht korrekt in der Fassung sitzt. Ferner kann es sein, dass das Schaltelement selbst defekt ist bzw. einen Defekt aufweist. In jedem Fall kann eine verbleibende Spannung in der Batterie zu einem Lichtbogen während des weiteren Recycling-Prozesses führen, was wiederum eine Gefahr darstellt.

Das Durchführen einer Spannungsmessung vor dem Lösen der Leistungselektronik bewirkt daher in vorteilhafter Weise, dass die Sicherheit beim Recyceln der Batterie erhöht wird.

In einer Ausführungsform werden die Steuerbefehle für das Verbindungssystem von einem Algorithmus des maschinellen Lernens erzeugt.

In einem weiteren Aspekt betrifft die Erfindung ein computerimplementiertes Verfahren zum Trainieren eines Systems für die Steuerung einer Vorrichtung zum automatisierten Entladen von Batterien, wobei das Verfahren die folgenden Schritte umfasst:
- Bereitstellen einer Batterie mit zwei elektrischen Kontakten, wobei die Kontakte für ein Sensorsystem detektierbar markiert sind;
- Erfassen von Positionsdaten der Batterie und Positionsdaten der Kontakte mit dem Sensorsystem;
- Erzeugen von Steuerbefehlen zum Positionieren von Roboterarmen eines Verbindungssystems an den Kontakten der Batterie aus den Positionsdaten der Batterie unter Verwendung eines Algorithmus des maschinellen Lernens;
- Steuern der Roboterarme mit den erzeugten Steuerbefehlen;
- Ermitteln einer Verlustfunktion aus der Position der Roboterarme nach dem Steuern und den Positionsdaten der Kontakte;
- Trainieren des Algorithmus des maschinellen Lernens entsprechend dem Ergebnis der Verlustfunktion; und
- Bereitstellen des trainierten Algorithmus des maschinellen Lernens zum Erzeugen von Steuerbefehlen für die Roboterarme.

Der Algorithmus des maschinellen Lernens wird insbesondere darauf trainiert, die Batterie, bzw. deren Typ oder Modell zu erkennen und dementsprechend die Position ihrer Kontakte zu identifizieren. Der letztlich bereitgestellte Algorithmus des maschinellen Lernens soll die Kontakte ohne die Markierung erkennen können.

Die Markierungen werden an den Kontakten angebracht, um als Grundwahrheit verwendet werden zu können. Wenn das Sensorsystem optische Sensoren umfasst, können die

Markierungen optische, insbesondere visuelle Markierungen, beispielsweise farbliche Hervorhebungen umfassen.

Der Algorithmus des maschinellen Lernens kann auf diese Weise im Einsatz trainiert werden, solange Batterien mit einer entsprechenden Markierung an den Kontakten bereitgestellt werden. Da die Kontakte angebracht werden, bevor die Batterie tiefentladen oder gar kontaktiert wird, stellt das Anbringen von Kontakten keine allzu große Gefahr für eine markierende Person oder ein entsprechendes automatisches System dar.

In einem weiteren Aspekt betrifft die Erfindung ein Computerprogramm mit Programmcode, um ein Verfahren zum automatisierten Entladen von Batterien auszuführen, wenn das Computerprogramm auf einem Computer ausgeführt wird.

In einem weiteren Aspekt betrifft die Erfindung ein Computerprogramm mit Programmcode, um ein Verfahren zum Trainieren eines Systems für die Steuerung einer Vorrichtung zum automatisierten Entladen von Batterien auszuführen, wenn das Computerprogramm auf einem Computer ausgeführt wird.

In einem weiteren Aspekt betrifft die Erfindung einen computerlesbaren Datenträger mit Programmcode eines Computerprogramms, um ein Verfahren zum automatisierten Entladen von Batterien auszuführen, wenn das Computerprogramm auf einem Computer ausgeführt wird.

In einem weiteren Aspekt betrifft die Erfindung einen computerlesbaren Datenträger mit Programmcode eines Computerprogramms, um ein Verfahren zum Trainieren eines Systems für die Steuerung einer Vorrichtung zum automatisierten Entladen von Batterien auszuführen, wenn das Computerprogramm auf einem Computer ausgeführt wird.

Insgesamt werden somit eine Vorrichtung zum automatisierten Entladen von Batterien, ein Verfahren zum automatisierten Entladen von Batterien, ein computerimplementiertes Verfahren zum Trainieren eines Systems für die Steuerung einer Vorrichtung zum automatisierten Entladen von Batterien sowie ein entsprechendes Computerprogramm und ein entsprechender computerlesbarer Datenträger mit Programmcode angegeben.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
Fig. 1a-f schematisch den Ablauf eines Verfahrens zum automatisierten Entladen von Batterien mit einer entsprechenden Vorrichtung;
Fig. 2 einen Teil einer Vorrichtung zum automatisierten Entladen von Batterien.

In den Figuren der Zeichnungen bezeichnen gleiche Bezugszeichen gleiche oder funktionsgleiche Elemente, Bauteile oder Komponenten, soweit nichts Gegenteiliges angegeben ist.

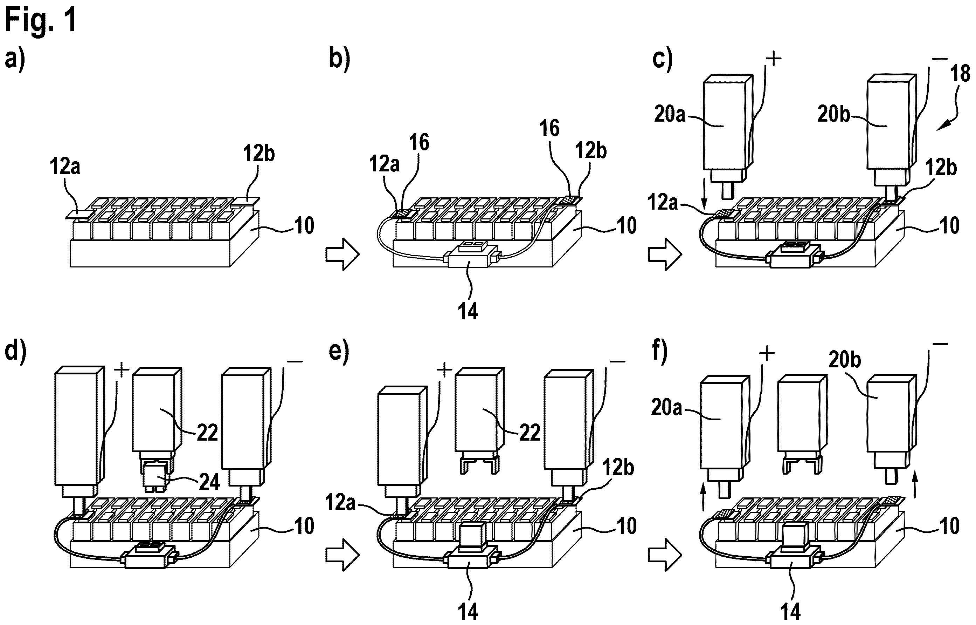

Fig. 1a bis 1f zeigen schematisch das automatisierte Entladen einer Batterie 10. In Figur 1a ist die Batterie 10 mit zwei Polen 12a und 12b dargestellt, die im späteren Verfahrensverlauf als batterieseitige Kontakte verwendet werden.

In Figur 1b ist eine Schaltvorrichtung 14 über die Pole 12a und 12b mit der Batterie 10 elektrisch verbunden. An den Polen 12a und 12b wurden ferner Markierungen 16 angebracht, mit denen die weitere Kontaktierung vereinfacht wird. Die Schaltvorrichtung 14 besteht in der dargestellten Ausführungsform aus einer Sicherung und einer Sicherungsfassung. Die Sicherungsfassung ist in Figur 1b bereits mit der Batterie verbunden. Die Schaltvorrichtung wird aktiviert, indem die Sicherung in die Sicherungsfassung eingesetzt wird.

In Figur 1c nähert sich ein Verbindungssystem 18 der Batterie. Das Verbindungssystem umfasst in der dargestellten Ausführungsform zwei Roboterarme 20a und 20b. Die Roboterarme 20a und 20b sind mit positiven und negativen Kontakten einer Leistungselektronik (hier nicht dargestellt) zum Entladen der Batterie 10 verbunden. Die Roboterarme 20a und 20b werden mit den Polen 12a bzw. 12b verbunden, um so die Batterie 10 elektrisch mit der Leistungselektronik zu verbinden.

In Figur 1d wird die Batterie 10 entladen. Während des Entladeprozesses wird eine Aktivierungsvorrichtung 22, hier als Linearaktuator mit Greifarm dargestellt, verwendet, um eine Sicherung 24 auf die Sicherungsfassung zuzubewegen und in diese einzusetzen, sobald die Batterie 10 entladen ist. Dies ist in Figur 1e dargestellt. Die Aktivierungsvorrichtung 22 hat somit ihre Aufgabe erfüllt und kann zurückgezogen werden. Die Schaltvorrichtung 14, umfassend die Sicherung 24 in der Sicherungsfassung, befindet sich nun in einem elektrisch leitenden Zustand und schließt die Pole 12a und 12b kurz. Damit kann sich die verbleibende Spannung zwischen den Polen 12a und 12b über die Sicherung abbauen. Eine Relaxationsspannung zwischen den Polen 12a und 12b wird somit verhindert.

Figur 1f zeigt die mit dem Schaltelement 14 kurzgeschlossene Batterie 10. Die Roboterarme 20a und 20b werden nicht länger benötigt. Mit ihrem Rückzug wird die Batterie 10 von der Leistungselektronik getrennt. Die Batterie 10 ist nun entladen und kann recycelt werden.

Die Figuren 1a bis 1f zeigen insbesondere eine Ausführungsform, in der die Markierungen 16 verwendet werden können, um von einem hier nicht dargestellten Sensorsystem erfasst zu werden. Die Daten können dazu verwendet werden, einen Algorithmus des maschinellen Lernens darauf zu trainieren, die Batterie 10 beziehungsweise den Batterietyp und/oder das Batteriemodell zu identifizieren und dementsprechend geeignete Steuerbefehle für das Verbindungssystem zu generieren.

In alternativen Ausführungsformen wird die Sicherungsfassung mit den Roboteratmen 20a und 20b mit den Polen 12a und 12b elektrisch verbunden, um die Verbindung der Leistungselektronik und das Schaltelement 14 gleichzeitig mit der Batterie 10 herzustellen und nicht wie in den Figuren 1a bis 1e angedeutet, nacheinander.

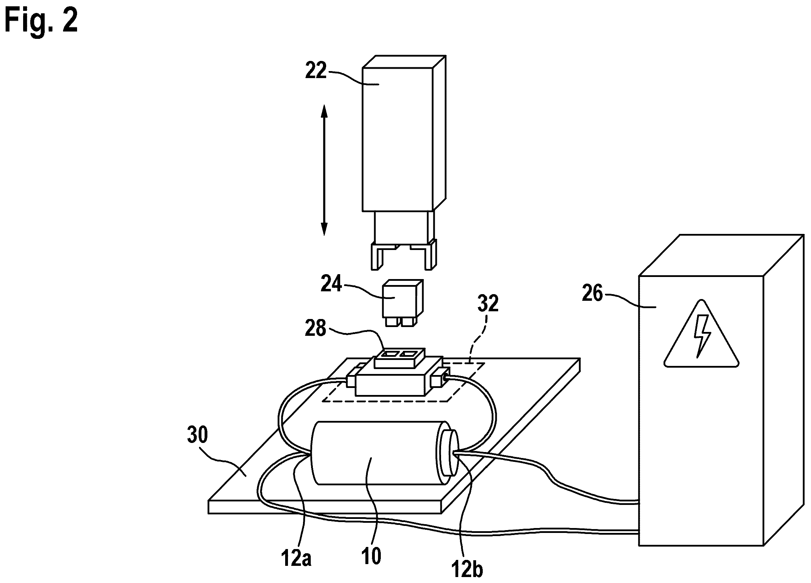

Figur 2 zeigt eine Variante der Erfindung. Während der Kontaktierung mit der Leistungselektronik 26 wird bereits eine offene Kabelverbindung, vorzugsweise ein Kabel mit einer offenen KFZ-Sicherungsfassung 28 für Flachsicherungen, an die Pole 12a und 12b der Batterie 10 angebracht. Dieses Kabel mit der offenen Sicherungsfassung 28 kann dabei mittels Punktschweißen, Kleben, Schrauben oder Klemmen an die Pole 12a und 12b der Batterie 10 angebracht werden.

Bei dieser Automatisierungslösung können zwei Varianten unterschieden werden. In der dargestellten Variante erfolgt der Transport der Batterie 10 auf einem Werkstückträger 30. Alternativ kann das Verfahren ohne Werkstückträger 30 ausgeführt werden. Da diese zweite Variante im Wesentlichen in den Figuren 1a bis 1f dargestellt ist, wird sie im Folgenden nicht näher beschrieben.

Der Werkstückträger 30 und seine Verwendung bewirken in vorteilhafter Weise, dass die Batterie 10 nach dem Entladen nicht direkt angegriffen werden muss, um sie zu bewegen. Da Batterien heiß werden, sich aufblähen und damit instabil werden können, erhöht die Verwendung des Werkstückträgers die Sicherheit bei der Handhabung der Batterie 10 im tiefentladenen Zustand.

Die Sicherungsfassung wird an einem definierten Ort auf dem Werkstückträger 30 fixiert, vorteilhafterweise neben oder auf der Batterie 10. Neben der Batterie 10 kann die Sicherungsfassung 28 mechanisch fixiert werden, beispielsweise mittels einer wieder lösbaren Klemm- oder Schraubvorrichtung. Auf der Batterie 10 kann die Sicherungsfassung 28 geklemmt, geschraubt oder geklebt werden. Eine verklebte Sicherungsfassung 28 kann an der Batterie 10 verbleiben.

Bei der Fixierung auf dem Werkstückträger 30 sollte beachtet werden, dass es häufig gewünscht ist, aus Sicherheitsgründen die Kurzschlussbrücke mit ins Recycling zu geben. Das Schaltelement sollte somit wieder einfach zu lösen sein, da der Werkstückhalter 30 meist nicht der mechanischen Zerkleinerung zugeführt werden soll.

Die Sicherung 24 wird nach der Tiefentladung mittels eines Linearaktuators 22, der mit einem passenden Greifer ausgerüstet ist, in die Sicherungsfassung 28 gesteckt. Dabei wird immer der gleiche Ort gewählt, damit auf eine Bewegung parallel zum Werkstückträger 30 in x- oder y-Richtung verzichtet werden kann. Dieser Ort kann für das Trainieren eines Algorithmus des maschinellen Lernens ebenfalls mit einer Markierung 32 gekennzeichnet sein. Zudem kann ein Ausgleichsmodul an den Linearaktuator 30 angebracht sein, um kleinere örtliche Abweichungen der offenen Sicherungsfassung 28 auszugleichen.

## Patentansprüche

1. Vorrichtung zum automatisierten Entladen von Batterien (10), wobei die Vorrichtung umfasst:
- eine Leistungselektronik (26) zum Tiefentladen einer Batterie (10);
- eine Aktivierungsvorrichtung (22) zum Aktivieren eines Schaltelements (14);
- zumindest ein Verbindungssystem (18) zum elektrischen Verbinden und Lösen einer elektrischen Verbindung der Leistungselektronik (26) mit den Polen (12a, 12b) der Batterie (10) und zum Verbinden des Schaltelements (14) mit den Polen (12a, 12b) der Batterie (10); und
- eine Steuerung zum Steuern der Leistungselektronik (26), des Verbindungssystems (18) und der Aktivierungsvorrichtung (22), wobei die Steuerung dazu ausgebildet ist, die Aktivierungsvorrichtung (22) zu betätigen, nachdem die Leistungselektronik (26) die Batterie (10) tiefentladen hat.

2. Vorrichtung nach Anspruch 1, wobei das Verbindungssystem (18) zumindest zwei Roboterarme (20a, 20b) umfasst und wobei die Roboterarme (20a, 20b) dazu ausgebildet sind, die Leistungselektronik (26) und/oder das Schaltelement (14) mit den Polen (12a, 12b) der Batterie (10) zu verbinden.

3. Vorrichtung nach einem der vorangegangenen Ansprüche, wobei die Leistungselektronik (26) und/oder die Schalteinrichtung (14) über Kontakte mit den Polen (12a, 12b) der Batterie (10) verbindbar sind und wobei das Verbindungsverbindungssystem (18) ein Sensorsystem zum Positionieren der Kontakte der Leistungselektronik (26) und/oder der Schalteinrichtung (14) an den Polen (12a, 12b) der Batterie (10) umfasst.

4. Vorrichtung nach Anspruch 3, wobei die Steuerung ein Modul zur Steuerung des Verbindungssystems (18) umfasst, wobei das Modul zur Steuerung der Verbindungseinrichtung (18) einen Algorithmus des maschinellen Lernens zum Erkennen der Position der Kontakte an der Batterie (10) aus den Sensordaten des Sensorsystems umfasst.

5. Vorrichtung nach einem der vorangegangenen Ansprüche, wobei das Schaltelement (14) dazu ausgebildet ist, von einem elektrisch nicht-leitenden Zustand in einen elektrisch leitenden Zustand geschaltet zu werden.

6. Vorrichtung nach Anspruch 5, wobei das Schaltelement (14) einen mechanischen Schalter, einen elektronischen Schalter, eine Sicherung (24), ein elektrochemisches Element, und/oder ein thermoelektrisches Element umfasst.

7. Vorrichtung nach einem der Ansprüche 5 oder 6, wobei die Aktivierungsvorrichtung (22) einen Linearaktuator umfasst, wobei der Linearaktuator dazu ausgebildet ist, das Schaltelement (14) von dem nicht-leitenden Zustand in den leitenden Zustand zu schalten.

8. Verfahren zum automatisierten Entladen von Batterien (10) mit einer Vorrichtung nach einem der vorangegangenen Ansprüche, wobei das Verfahren die folgenden Schritte umfasst:
- Elektrisches Verbinden der Leistungselektronik (26) mit den Polen (12a, 12b) der Batterie (10);
- Entladen der Batterie (10) bis auf eine Entladespannung mit der Leistungselektronik (26);
- Elektrisches Verbinden des Schaltelements (14) mit den Polen (12a, 12b) der Batterie (10);
- Kurzschließen der Batterie (10) durch Aktivieren des Schaltelements (14) mit der Aktivierungsvorrichtung (22) nachdem die Spannung der Batterie (10) die Entladespannung erreicht hat; und
- Elektrisches Trennen der Leistungselektronik (26) von der Batterie (10) nach dem Kurzschließen oder während des Kurzschließens der Batterie (10).

9. Verfahren nach Anspruch 8, wobei das elektrische Verbinden des Schaltelements (14) und der Leistungselektronik (26) mit den Polen (12a, 12b) der Batterie (10) gleichzeitig durch das Verbindungssystem (18) erfolgt.

10. Verfahren nach einem der Ansprüche 8 bis 9, wobei dem elektrischen Verbinden der Leistungselektronik (26) und des Schaltelements (14) ein Positionieren des Verbindungssystems (18) an den Polen (12a, 12b) der Batterie (10) vorausgeht.

11. Verfahren nach Anspruch 10, wobei das Verbindungssystem (18) zwei Roboterarme (20a, 20b) und für jeden Roboterarm (20a, 20b) ein Sensorsystem umfasst und wobei das Positionieren des Verbindungssystems (18) umfasst:
- Erfassen der Position der Kontakte der Batterie (10) mit den Sensorsystemen;
- Erzeugen von Steuerbefehlen zur Steuerung der Roboterarme (20a, 20b); und
- Heranführen der Kontakte der Leistungselektronik (26) und des Schaltelements (14) an die Kontakte der Batterie (14) durch Ausführen der Steuerbefehle.

12. Verfahren nach einem der Ansprüche 8 bis 11, wobei dem Lösen der Verbindung der Leistungselektronik (26) vorausgeht:
- Messen der Spannung an dem Schaltelement (14);
wobei die elektrische Verbindung der Leistungselektronik (26) von der Batterie (10) erst dann gelöst wird, wenn die Spannung an dem Schaltelement (14) null Volt beträgt.

13. Computerimplementiertes Verfahren zum Trainieren eines Systems für die Steuerung einer Vorrichtung zum automatisierten Entladen von Batterien (10), wobei das Verfahren die folgenden Schritte umfasst:
- Bereitstellen einer Batterie (10) mit zwei elektrischen Kontakten, wobei die Kontakte für ein Sensorsystem detektierbar markiert sind;
- Erfassen von Positionsdaten der Batterie (10) und Positionsdaten der Kontakte mit dem Sensorsystem unter Verwendung der Markierungen;
- Erzeugen von Steuerbefehlen zum Positionieren von Roboterarmen (20a, 20b) eines Verbindungssystems (18) an den Kontakten der Batterie (10) aus den Positionsdaten der Batterie (10) unter Verwendung eines Algorithmus des maschinellen Lernens;
- Steuern der Roboterarme (20a, 20b) mit den erzeugten Steuerbefehlen;
- Ermitteln einer Verlustfunktion aus der Position der Roboterarme (20a, 20b) nach dem Steuern und den Positionsdaten der Kontakte;
- Trainieren des Algorithmus des maschinellen Lernens entsprechend dem Ergebnis der Verlustfunktion; und
- Bereitstellen des trainierten Algorithmus des maschinellen Lernens zum Erzeugen von Steuerbefehlen für die Roboterarme (20a, 20b).

14. Computerprogramm mit Programmcode, um ein Verfahren nach einem der Ansprüche 8 bis 12 oder ein Verfahren nach Anspruch 13 auszuführen, wenn das Computerprogramm auf einem Computer ausgeführt wird.

15. Computerlesbarer Datenträger mit Programmcode eines Computerprogramms, um ein Verfahren nach einem der Ansprüche 8 bis 12 oder ein Verfahren nach Anspruch 13 auszuführen, wenn das Computerprogramm auf einem Computer ausgeführt wird.
